Europäisches Patentamt

European Patent Office

Office européen des brevets

(19)

(11) Veröffentlichungsnummer: **0 351 682**
**A2**

(12) **EUROPÄISCHE PATENTANMELDUNG**

(21) Anmeldenummer: **89112562.7**

(22) Anmeldetag: **10.07.89**

(51) Int. Cl.⁴: **B01D 17/028 , B01D 21/00**

(30) Priorität: **18.07.88 DE 3824295**

(43) Veröffentlichungstag der Anmeldung:
**24.01.90 Patentblatt 90/04**

(84) Benannte Vertragsstaaten:
**AT BE CH DE ES FR GB GR IT LI LU NL SE**

(71) Anmelder: **PREUSSAG AG BAUWESEN**
**Karl-Wiechert-Allee 4**
**D-3000 Hannover 61(DE)**

(72) Erfinder: **Maierski, Hans, Dr.**
**Heidelberger Strasse 29**
**D-6100 Darmstadt(DE)**

(74) Vertreter: **Haar, Lucas Heinz Jörn, Dipl.-Ing.**
**Königsberger Strasse 23**
**D-6360 Friedberg/Hessen(DE)**

(54) **Klärvorrichtung.**

(57) In einem quaderförmigen Käfig (1) sind vorzugsweise aus Kunststoff geformte Lamellenplatten (3) gestapelt, die in regelmäßigen Abständen jeweils in entgegengesetze Richtung in einem Winkel von jeweils 120 Grad abgebogen sind, wodurch einzelne, aneinanderhängende Lamellen (4) gebildet werden, deren Oberfläche zur Abscheidung sinkender oder schwimmender Substanzen aus einer in Längsrichtung der Lamellen (4) strömenden Flüssigkeit dienen. Die aufeinandergestapelten Lamellenplatten (3) werden durch Abstandsnoppen (7) die aus der Oberfläche einzelner Lamellen (4) hervorstehen, aneinander abgestützt und auf Abstand gehalten. Längs der Lamellenkanten sind im Abstand voneinander Öffnungen (6) vorgesehen, durch die die Flüssigkeit hindurchtreten kann. Die Lamellenplatten (3) können in vertikaler oder in horizontaler Anordnung in der Klärvorrichtung angeordnet sein.

FIG . 1

# KLÄRVORRICHTUNG

Die Erfindung betrifft eine Klärvorrichtung zum Abscheiden suspendierter, sinkfähiger und schwimmfähiger Stoffe aus einer Flüssigkeit mit einem von der Flüssigkeit im wesentlichen horizontal durchströmten Separator mit mehreren zu einem quaderförmigen Plattenstapel zusammengepackten Lamellenplatten, die Strömungskanäle begrenzen und aus abwechselnd in entgegengesetzten Richtungen im gleichen Winkel zur vertikalen geneigten und an ihren benachbarten Längskanten miteinander verbundenen Lamellen bestehen.

Eine Klärvorrichtung der angegebenen Art ist aus der US-PS 44 37 988 bekannt. Bei dieser bekannten Klärvorrichtung weisen die Lamellenplatten an ihren vier Ecken und an ihren Stirnseiten Verbindungsmittel in Form von abgestuften, ineinander steckbaren Zapfen auf, die den Mindestabstand der Platten festlegen und die Platten in ihrer Lage zueinander fixieren. Diese bekannte Anordnung hat den Nachteil, daß bei vertikaler Ausrichtung der Lamellenplatten das gesamte Plattengewicht von den unteren, auf den Behälterboden aufstehenden Plattenteilen aufgenommen werden muß, sodaß die Platten aufgrund ihrer Elastizität ausknicken und sich soweit verformen können, daß sie einander berühren und dadurch in ihrer Wirkung beeinträchtigt sind. Als nachteilig wird bei der bekannten Vorrichtung ferner angesehen, daß die Ausbildung der gestuften Zapfen an den Ecken und Rändern der Platten ein aufwendiges Herstellungsverfahren erfordert und daß der Zusammenhalt des Plattenstapels durch die Zapfen den Anforderungen bei Transport und Montage nur unzureichend genügt.

Demgegenüber ist es Aufgabe der Erfindung, eine Klärvorrichtung der eingangs genannten Art zu schaffen, die auf einfache und kostengünstige Weise herstellbar ist und bei der eine Anzahl von Lamellenplatten zu einer leicht handhabbaren baulichen Einheit verbunden und an unerwünschten Verformungen gehindert ist.

Zur Lösung dieser Aufgabe ist erfindungsgemäß vorgesehen, daß eine Anzahl Lamellenplatten zu einem quaderförmigen Plattenstapel zusammengepackt und durch einen quaderförmigen Käfig zusammengehalten sind und daß mehrere, vorzugsweise in den Randbereichen liegende Öffnungen der Lamellenplatten von Stäben durchdrungen sind, deren Enden an Streben des den Plattenstapel umgebenden Käfigs lösbar befestigt sind.

Mit der Erfindung wird ein Stapel von Lamellenplatten zu einer in sich stabilen baulichen Einheit verbunden, die sich leicht transportieren und auf einfache Weise in Anlagen unterschiedlicher Ausgestaltung einbauen läßt. Durch den quaderförmigen Käfig wird diese bauliche Einheit in einem solchen Maße stabilisiert, daß sich mehrere Einheiten übereinanderstapeln lassen. Dies erleichtert nicht nur den Transport sondern ermöglicht auch den Einbau mehrerer Plattenstapel über- und nebeneinander zur Schaffung einer Klärvorrichtung größerer Leistung. Die einzelnen Lamellenplatten können, da sie durch den Käfig gestützt und gehalten werden eine vergleichsweise geringe Festigkeit haben und daher aus einem dünnen und leichten Material bestehen. Entsprechend läßt sich in einem Käfig bei einem vorgegebenen Plattenabstand eine große Anzahl von Lamellenplatten unterbringen und dementsprechend eine große Plattenoberfläche realisieren. Die Klärleistung kann daher mit der erfindungsgemäßen Vorrichtung im Vergleich zu der bekannten Vorrichtung deutlich gesteigert werden die einzelnen Lamellenplatten an einer Verformung innerhalb des Käfigs gehindert, gleichgültig ob sie in horizontaler oder vertikaler Richtung angeordnet sind.

Die Herstellung der erfindungsgemäßen Klärvorrichtung ist besonders einfach, da die Lamellenplatten aus ebenen, plattenförmigen Rohteilen durch Biegen oder Abkanten mit einfachen Vorrichtungen gebildet werden können. Die auf diese Weise hergestellten Lamellenplatten sind außerordentlich steif und lassen sich mit einfachen Mitteln zu einem Separatorkörper schichten, ohne daß es hierzu aufwendiger Montagevorgänge bedarf. Durch ihre gegenseitige Verbindung an den Längskanten wird zudem eine erhebliche Versteifung der einzelnen Lamellen erzielt, so daß die Dicke der Lamellen geringer und somit der Materialaufwand zur Herstellung der Klärvorrichtung verringert werden kann. Die erfindungsgemäße Klärvorrichtung zeichnet sich weiterhin durch eine hohe Variabilität aus, da die Anzahl der Lamellenplatten beliebig variiert werden kann. Schließlich konnte mit der erfindungsgemäßen Klärvorrichtung eine Leistungssteigerung erzielt werden, was auf die günstigen, durch Haltereinrichtungen für die Lamellen nicht gestörten Strömungsverhältnisse zwischen den Lamellenplatten zurückzuführen ist. Die erfindungsgemäße Vorrichtung eignet sich gleichermaßen zur Abscheidung sinkfähiger und schwimmfähiger Substanzen, wobei sich für die Abscheidung sinkfähiger Substanzen eine vertikale Anordnung der Lamellenplatten und für die Abscheidung schwimmfähiger Substanzen eine horizontale Anordnung der Lamellenplatten als besonders zweckmäßig erwiesen haben.

In einer bevorzugten Ausgestaltung der Erfindung sind die Lamellenplatten derart zueinander ausgerichtet, daß die Lamellen benachbarter Lamellenplatten gleiche Abstände voneinander haben. Hierdurch entstehen praktisch gleiche Strömungsverhältnisse in allen Strömungskanälen des Separators, so daß eine optimale Ausnutzung des jeweils verfügbaren Einbauraums möglich ist. In Sonderfällen kann es jedoch auch sinnvoll sein, die Lamellenplatten versetzt zueinander anzuordnen, so daß Strömungskanäle unterschiedlichen Querschnitts entstehen.

Eine günstige Betriebsweise der Klärvorrichtung wird erfindungsgemäß erzielt, wenn jeweils zwei miteinander verbundene Lamellen einen Winkel von 120 Grad einschließen. Bei vertikaler Anordnung der Lamellenplatten ergibt sich dann ein Neigungswinkel der einzelnen Lamellen gegenüber der Horizontalen von 60 Grad, der zu einem guten Selbstreinigungsverhalten der Klärvorrichtung führt. Für die Abscheidung schwimmfähiger Substanzen ist ein horizontaler Einbau der Lamellenplatten besonders günstig, wobei die einzelnen Lamellen einen Neigungswinkel von 30 Grad gegenüber der Horizontalen haben. Um bei einer solchen horizontalen Anordnung das Aufsteigen der an den Lamellen abgeschiedenen, schwimmfähigen Substanzen zu ermöglichen, sind erfindungsgemäß längs der Verbindungsstellen der Lamellen im Abstand voneinander Öffnungen vorgesehen.

Die erfindungsgemäßen Lamellenplatten eignen sich besonders zur Herstellung aus einem thermoplastischen Kunststoff. Hierbei können die Platten entweder aus ebenem plattenförmigen Material gebogen oder auch mit erfindungsgemäßer Profilierung extrudiert werden.

Die Erfindung schlägt weiterhin vor, daß die Lamellenplatten aus einem Kunststoff hergestellt werden, dessen Dichte annähernd gleich oder kleiner ist als die Dichte der zu klärenden Flüssigkeit. Dies hat den Vorteil, daß die Lamellenplatten in den Flüssigkeit schweben, wobei sie bei einer unter der Flüssigkeitsdichte liegenden Dichte noch in der Lage sind, das Gewicht der angelagerten Sedimente zu tragen. Hierdurch können die Lamellenplatten sehr dünn und leicht ausgebildet sein, ohne daß dadurch im Betrieb ihre Formgestalt beeinträchtigt wird. Bei Klärvorrichtungen für Wasser wird erfindungsgemäß vorgeschlagen, die Lamellenplatten aus hochdruckvernetztem Polyäthylen (HDPE) herzustellen, dessen Dichte etwas geringer ist als die Dichte des Wassers.

Die Erfindung wird nachfolgend anhand eines in der Zeichnung dargestellten Ausführungsbeispiels näher erläutert. Es zeigen

Figur 1 eine perspektivische Darstellung eines Separators für eine erfindungsgemäße Klärvorrichung beim Zusammenbau und

Figur 2 einen Teilschnitt durch den Separator gemäß Figur 1 quer zur Strömungsrichtung.

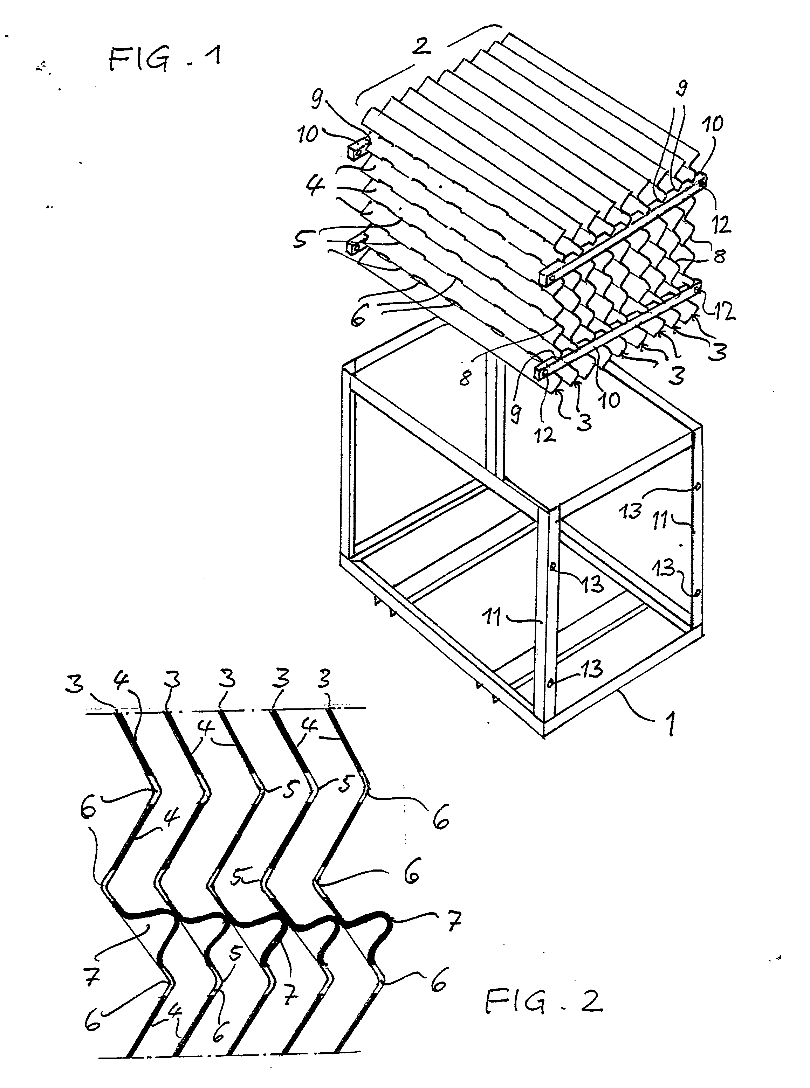

Figur 1 zeigt die wesentlichen Bauelemente eines Separators für eine erfindungsgemäße Klärvorrichtung, mit der ein Wasserstrom oder ein Strom einer anderen Flüssigkeit geklärt werden kann, indem in der Flüssigkeit suspendierte, schwimm- oder sinkfähige Stoffe von ihr getrennt werden. Der Separator besteht aus einem quaderförmigen Käfig 1, der aus Profilstäben, vorzugsweise aus rostfreiem Stahl, hergestellt ist. In den Käfig 1 ist von oben ein Stapel 2 aus einzelnen Lamellenplatten 3 einsetzbar. Die Abmessungen des Käfigs 1 und des Stapels 2 sind dabei so aufeinander abgestimmt, daß die einzelnen Lamellenplatten nach dem Einsetzen des Stapels 2 in den Käfig 1 durch die Käfigstäbe zusammengehalten werden. Auf der Oberseite können nach dem Einsetzen des Stapels 2 zusätzliche Halteschienen an den Käfig 1 angebracht werden, um den Stapel 2 sicher mit dem Käfig 1 zu verbinden.

Die Lamellenplatten 3 haben ein sich in Längsrichtung erstreckendes Zick-Zack-Profil, durch welches einzelne, ebene Lamellen 4 gebildet werden, die zur Grundebene der Lamellenplatten abwechselnd in entgegengesetzten Richtungen im gleichen Winkel geneigt sind und an ihren Längskanten 5 miteinander in Verbindung stehen, wobei sie jeweils in einem Winkel von 120 Grad aufeinander treffen. Jede der abgebildeten Lamellenplatten 3 besteht somit aus dreizehn Lamellen 4, die an zwölf Längskanten 5 miteinander in Verbindung stehen. An den jeweils zwei Lamellen 4 verbindenden Längskanten 5 sind im Abstand voneinander mehrere Öffnungen 6 vorgesehen, durch die die Flüssigkeit hindurchtreten kann. Weiterhin sind jeweils auf einer Seite der Lamellenplatten 3 einzelne Lamellen 4 mit aus der Lamellenoberfläche hervorstehenden Abstandsnoppen 7 versehen, die durch plastische Verformung des Plattenwerkstoffs gebildet sind.

Um die Lamellenplatten 3 innerhalb des Käfigs 1 besser halten zu können und eine Verformung der Lamellenplatten vor allem beim Transport des mit Lamellenplatten gefüllten Käfigs zum Einsatzort zu vermeiden, weisen die Lamellenplatten 3 an ihren Stirnkanten 8 nach außen offene Ausschnitte 9 auf. In die Ausschnitte 9 sind Stäbe 10 eingelegt, die sich über die gesamte Breite des Stapels 2 erstrecken und deren Enden mit den Eckstreben 11 des Käfigs 1 verschraubt werden können. Hierzu weisen die Stäbe 10 an ihren Enden Gewindebohrungen 12 auf, in die von außen durch Bohrungen 13 in den Eckstreben 11 hindurchgesteckte Schrauben eingeschraubt werden.

Zur Bildung einer erfindungsgemäßen Klärvorrichtung werden in einen in einem Behälter ausgebildeten Strömungspfad, der von der zu klärenden Flüssigkeit horizontal durchflossen wird, ein oder mehrere von Käfigen 1 zusammengehaltene Stapel 2 aus Lamellenplatten 3 so eingesetzt, daß sich die Lamellen 4 in Strömungsrichtung erstrecken. Sollen sinkfähige bzw. sink- und schwimmfähige Stoffe aus der Flüssigkeit abgetrennt werden, so werden die Stapel 2 so angeordnet, daß ihre Lamellenplatten 3 aufrecht stehen. Die einzelnen Lamellen 4 sind somit in einem Winkel von 60 Grad zur Vertikalen geneigt, so daß die sich anlagernden sinkfähigen Partikel auf den Lamellen 4 nach unten gleiten können, um über die Längskanten 5 der Lamellen 4 in den Zwischenraum zwischen den Platten 3 zu gelangen, durch den sie nach unten in einen unterhalb des Stapels vorgesehenen Sammelbehälter absinken. Gleichzeitig können schwimmende Substanzen sich an den Unterseiten der Lamellen 4 anlagern, von wo sie ebenfalls durch den Zwischenraum zwischen den Lamellenplatten 3 nach oben steigen, wo sie oberhalb des Plattenstapels, beispielsweise über eine Überlaufkante, abgeleitet werden können. Sollen nur schwimmfähige Substanzen mit Hilfe des erfindungsgemäßen Separators abgetrennt werden, so hat sich eine um 90 Grad gedrehte Anordnung des Stapels 2, bei der die Lamellenplatten 3 horizontal aufeinanderliegen, als günstig erwiesen. Die schwimmfähigen Substanzen, beispielsweise suspendierte Flüssigkeitströpfchen, lagern sich dann an den in einem Winkel von 30 Grad zur Horizontalen geneigten Lamellen an und sammeln sich jeweils an der Unterseite der miteinander verbundenen Längskanten 5 der Lamellen 4, von wo sie durch die Öffnungen 6 in größeren Tropfen oder schwimmfähigen Agglomeraten nach oben geleitet werden.

Die erfindungsgemäße Klärvorrichtung bietet somit vielseitige Anwendungsmöglichkeiten. So können beispielsweise in einer Klärvorrichtung auch mehrere Plattenstapel in unterschiedlicher Lage übereinander oder hintereinander angeordnet werden, um je nach dem Abscheidungsverhalten der in der zu klärenden Flüssigkeit suspendierten Stoffe optimale Abscheidungsbedingungen zu schaffen. Dabei lassen sich die Separatoren auf einfache Weise herstellen und durch Variation ihrer Lamellenplattenzahl unterschiedlichen baulichen Gegebenheiten anpassen: Schließlich ist das Warten und Reinigen der erfindungsgemäßen Klärvorrichtungen sehr einfach, da die Separatoren leicht demontiert werden können.

## Ansprüche

1. Klärvorrichtung zum Abscheiden suspendierter, sinkfähiger und schwimmfähiger Stoffe aus einer Flüssigkeit mit einem von der Flüssigkeit im wesentlichen horizontal durchströmten Separator mit mehreren zu einem quaderförmigen Plattenstapel (2) zusammengepackten Lamellenplatten, die Strömungskanäle begrenzen und aus abwechselnd in entgegengesetzten Richtungen im gleichen Winkel zur Vertikalen geneigten und an ihren benachbarten Längskanten miteinander verbundenen Lamellen bestehen, dadurch gekennzeichnet, daß die Lamellenplatten (3) durch einen quaderförmigen Käfig (1) zusammengehalten sind und daß mehrere, vorzugsweise in den Randbereichen liegende Öffnungen (6, 9) der Lamellenplatten (3) von Stäben (10) durchdrungen sind, deren Enden an Streben (11) des den Plattenstapel (2) umgebenden Käfigs (1) lösbar befestigt sind.

2. Klärvorrichtung nach Anspruch 1, dadurch gekennzeichnet, daß die Öffnungen, in die die mit dem Käfig (1) verbindbaren Stäbe (10) eingreifen, durch Ausschnitte (9) in den Stirnkanten (8) der Lamellenplatten (3) gebildet sind.

3. Klärvorrichtung nach einem der vorhergehenden Ansprüche, dadurch gekennzeichnet, daß die Lamellenplatten (3) aus einem thermoplastischen Kunststoff bestehen, dessen Dichte annähernd gleich oder kleiner ist als die Dichte der zu klärenden Flüssigkeit.

4. Klärvorrichtung für Wasser nach Anspruch 4, dadurch gekennzeichnet, daß die Lamellenplatten (3), aus hochdruckvernetztem Polyäthylen (HDPE) bestehen.

5. Klärvorrichtung nach Anspruch 1, dadurch gekennzeichnet, daß jeweils zwei miteinander verbundene Lamellen (4) einen Winkel von 120 Grad einschließen.

FIG.1

FIG.2